# EUROPÄISCHE PATENTSCHRIFT

(11) **EP 3 805 437 B1**
(45) Veröffentlichungstag und Bekanntmachung des Hinweises auf die Patenterteilung: **13.03.2024**
(21) Anmeldenummer: 20194126.7
(22) Anmeldetag: 02.09.2020
(51) Int. Cl.: D02G 3/16, D02G 3/40, B29C 64/118

(54) **NEUARTIGER ZWIRN**
NOVEL TWISTED YARN
NOUVEAU FIL PRÉSENTANT UN CERTAIN DEGRÉ DE TORSION

(30) Priorität: 02.09.2019 DE 102019213250
(43) Veröffentlichungstag der Anmeldung: 14.04.2021
(73) Patentinhaber: SGL Carbon SE, 65201 Wiesbaden (DE)
(72) Erfinder: VON BISTRAM, Max, 86405 Meitingen (DE); PROELL, Emily, 86405 Meitingen (DE); SCHULZE, Sebastian, 86405 Meitingen (DE); WILLEMIN, Yannick, 86405 Meitingen (DE); SCHMITZ, Jonas, 86405 Meitingen (DE)

(56) Entgegenhaltungen:
- US-A1- 2018 096 799

## Beschreibung

Die vorliegende Erfindung betrifft einen neuen imprägnierten Zwirn umfassend endliche Kohlenstofffasern, ein Verfahren zur Herstellung eines solchen Zwirns und dessen Verwendung.

EP 3059340 A1 beschreibt ein gemischtes Garn, welches kontinuierliche Thermoplastharzfasern und kontinuierliche Verstärkungsfasern enthält, wobei als Verstärkungsfasern Kohlenstofffasern eingesetzt werden können.

Aus der US 2014/0329086 A geht ein Verbundgarn umfassend kontinuierliche Kohlenstofffasern und kontinuierliche Thermoplastharzfasern hervor; dieses Verbundgarn kann erwärmt werden, so dass das Thermoplastharz im Garn schmilzt und eine thermoplastische Harzmatrix bildet. Hier wird auch die Verwendung von Kohlenstoff-Stapelfasern beschrieben, was allerdings zu schlechteren mechanischen Eigenschaften des Garns führt. Über die Bildung einer Harzmatrix wird es ermöglicht, dass Bauteile umfassend kontinuierliche Kohlenstofffasern, gute mechanische Eigenschaften aufweisen.

DE 102010030773 A1 beschreibt Nähgarne, umfassend Stapelfasern, welche Kohlenstofffasern enthalten können; die Garne können imprägniert sein, und zwar mit einem Imprägniergehalt in einem Bereich von 0,1 bis 50 %. Diese Nähgarne können einem Zwirnprozess unterzogen werden. Diese Nähgarne sollen ein konstantes Eigenschaftsprofil aufweisen und besser verarbeitbar sein.

US 2018/0096799 A beschreibt einen Zwirn umfassend mindestens zwei Garne, wobei mindestens ein Garn endliche Kohlenstofffasern enthält. Dieser Zwirn wird mit einem Elektrolyten beschichtet, wobei der Elektrolyt einen Polymergel darstellen kann.

Der Begriff "Garn" ist ein Sammelbegriff für alle linienförmigen textilen Gebilde, d.h. ein Garn stellt ein langes, dünnes Gebilde aus einer oder mehreren Fasern dar. Garne, die kontinuierliche Kohlenstofffasern enthalten, sind allerdings in ihrer Biegeflexibilität eingeschränkt. Diese eingeschränkte Biegeflexibilität führt zu einer schlechteren Drapierbarkeit des Garns, da die minimalen Biegeradien groß sind. Garne sind zudem nicht so kompakt, d.h. sie weisen eine nicht so hohe Stabilität auf. Weiterhin gibt es Nachteile in der Logistik und Verarbeitung, da größere Spulen notwendig sind, um das Garn aus kontinuierlichen Fasern aufzuwickeln. Die Verarbeitung wird zudem noch teurer, wenn zur Herstellung der Garne kontinuierliche Kohlenstofffasern mit niedriger Filamentzahl verwendet werden.

Ein Zwirn entsteht, wenn mindestens zwei Garne miteinander verdrillt werden.

Besteht ein Zwirn aus Stapelfasergarnen, die über einen Spinnprozess mit einem gewissen Drall hergestellt wurden, kann eine entgegensetzte Zwirndrehung diesen sinnvollerweise ausgleichen, was die textile Verarbeitung stabilisiert.

Ein imprägnierter Zwirn enthaltend endliche Kohlenstofffasern weist verbesserte mechanische Eigenschaften, wie eine verbesserte Querfestigkeit, ein verbessertes E-Modul oder eine verbesserte Biegefestigkeit auf. Die Verbesserung der mechanischen Eigenschaften ist darauf zurückzuführen, dass Kräfte über das imprägnierte Polymer besser eingeleitet und zwischen den Fasern verteilt werden. Die Fasern im Zwirn fungieren also als Verstärkungsfasern, während das imprägnierte Polymer eine Matrix darstellt.

Die bisher bekannten imprägnierten (Näh)garne bzw. Zwirne können beispielsweise begrenzt als Druckfilament im Fused Deposition Modelling (FDM), auch Filament 3D-Druck genannt, eingesetzt werden, da sie gute mechanische Eigenschaften wie eine hohe Stabilität und eine beschränkte Biegeflexibilität aufweisen. Allerdings ist diese Biegeflexibilität nicht ausreichend, um kleinere Kurvenradien beim FDM zu ermöglichen, was die Vielfalt und Komplexität des Druckbilds vergrößern würde.

Daher besteht die Aufgabe der vorliegenden Erfindung darin, ein textiles Gebilde enthaltend Kohlenstofffasern bereitzustellen, welches gute mechanische Eigenschaften, insbesondere eine verbesserte Biegeflexibilität bei gleichzeitig ausreichend hoher Stabilität, aufweist. Zudem soll dieses textile Gebilde kostengünstiger hergestellt werden können.

Im Rahmen der vorliegenden Erfindung wird diese Aufgabe gelöst durch einen Zwirn, umfassend mindestens zwei Garne, wobei mindestens ein Garn endliche Kohlenstofffasern enthält, und der Zwirn mit mindestens einem Polymer ausgewählt aus der Gruppe bestehend aus thermoplastisch verarbeitbare Polymeren, Duroplasten und/oder Elastomeren imprägniert ist, dadurch gekennzeichnet, dass der Faservolumengehalt im Zwirn weniger als 50 % beträgt.

Erfindungsgemäß wurde erkannt, dass durch einen Faservolumengehalt von weniger als 50 % in solch einem imprägnierten Zwirn einerseits eine ausreichende Festigkeit vorhanden ist, andererseits aber die Biegeflexibilität des Zwirns im Vergleich zu höheren Faservolumengehalten erhöht wird. Wird ein solcher Zwirn als beispielsweise 3D-Druckfilament verwendet, ist bei einem höheren Polymeranteil die Haftung zwischen den Drucklagen erhöht und die Zuführung des Filaments im Druckprozess wird durch die Biegeflexibilität verbessert und erleichtert.

Bei der Verdrillung von Garnen zu einem Zwirn werden bevorzugt 2 - 7 Garne, bevorzugter 2 - 5 Garne, und noch bevorzugter 2 - 3 Garne eingesetzt. Werden weniger als 2 Garne verwendet, wird bei der Verzwirnung nicht der gewünschte Stabilitätseffekt erzielt; bei Verwendung von mehr als 7 Garnen wird der Zwirn zu dick und damit im Querschnitt zu ungleichmäßig. Bei 7 Garnen ergibt sich zudem ein sogenannter Kabeleffekt, d.h. 1 Garn ist gerade und 6 weitere Garne werden um dieses erste Garn verdrillt.

Gemäß einer bevorzugten Ausführungsform der vorliegenden Erfindung weist der erfindungsgemäße imprägnierte Zwirn 2 - 21 Garne, bevorzugter 2 - 16 Garne, noch bevorzugter 2 - 10 Garne, besonders bevorzugt 2 - 7 Garne, ganz besonders bevorzugt 2 - 5 Garne und am meisten bevorzugt 2 - 3 Garne auf. Imprägnierte Zwirne aufweisend mehr als 7 Garne können beispielsweise erhalten werden, wenn mehrere Zwirne, jeweils aufweisend 2 - 7 Garne einem Pultrusionsvorgang unterzogen werden, bei welchem gleichzeitig auch die Imprägnierung erfolgt.

Die Garnherstellung aus Kohlenstofffasern erfolgt durch Verspinnen der Fasern. Hierfür können alle bekannten Verfahren, wie zum Beispiel das Ringspinnen, das Friktionsspinnen, das Trockenspinnen, das Schmelzspinnen oder das Nasspinnen eingesetzt werden.

In einer weiteren bevorzugten Ausführung der vorliegenden Erfindung umfasst das mindestens ein Garn, bevorzugter alle Garne, mindestens 25 - 100 Tex, bevorzugt 30 - 80, besonders bevorzugt 30 - 60 Tex. Bei einem Tex kleiner als 25 ist eine ausreichende Stabilität des damit hergestellten Zwirns nicht mehr gegeben; bei einem Tex von größer als 100 kann keine gute Imprägnierung des damit hergestellten Zwirns mehr sichergestellt werden und die Flexibilität des Zwirns nimmt ab. Somit können keine feinen Bauteile mehr hergestellt werden. Bei einem Tex von 25 ist eine ausreichende Stabilität gegeben.

Tex stellt ein Maß für die Dicke, den Durchmesser oder die Stärke von Textilien wie Garnen dar. Je kleiner der Durchmesser eines solchen Gebildes ist, desto feiner ist es bzw. desto größer ist seine Feinheit. Ein Tex entspricht 1 Gramm pro 1000 m.

Gemäß einer noch weiteren bevorzugten Ausführungsform der vorliegenden Erfindung weist der Zwirn mindestens ein Garn auf, welches aus endlichen Kohlenstofffasern gebildet ist, bevorzugter werden alle Garne aus endlichen Kohlenstofffasern gebildet.

Gemäß einer noch weiteren bevorzugten Ausführungsform der vorliegenden Erfindung stellen die endlichen Kohlenstofffasern, die zu einem Garn verarbeitet werden, streckgerissene Fasern oder Stapelfasern dar. Es ist auch möglich, dass eine Mischung aus streckgerissenen Fasern und Stapelfasern zu einem Garn verarbeitet wird.

Streckgerissene Fasern werden hergestellt, indem Fasern so lange gedehnt bzw. gestreckt bzw. gezogen werden, bis diese Fasern kontrolliert reißen, so wie es in der US 4,825,635 A dargestellt ist. Stapelfasern können hergestellt werden, indem Fasern geschnitten werden. Zur Herstellung der streckgerissenen Fasern oder Stapelfasern können Einzelfilamente oder Multifilamentstränge, bevorzugt Multifilamentstränge, verwendet werden. Unter einem Multifilamentstrang, auch Roving genannt, wird hierbei ein Bündel von Einzelfilamenten verstanden; bevorzugt umfasst dieser Roving Einzelfilamente in einem Bereich von 2000 bis 80000 Filamenten, bevorzugter in einem Bereich von 6000 bis 50000 Filamenten, noch bevorzugter in einem Bereich 12000 bis 50000 Filamenten, besonders bevorzugt in einem Bereich von 20000 bis 50000 Filamenten.

Im Rahmen der vorliegenden Erfindung wird es bevorzugt, dass die endlichen Kohlenstofffasern eine Länge in einem Bereich von 2 - 250 mm, bevorzugter in einem Bereich von 5 bis 200, noch bevorzugter in einem Bereich von 5 - 150 mm, besonders bevorzugt in einem Bereich von 10 - 130 mm aufweisen.

Der Faservolumengehalt der Kohlenstofffasern im erfindungsgemäßen imprägnierten Zwirn liegt bevorzugt in einem Bereich von 10 - 45 %, bevorzugter in einem Bereich von 25 - 40 %. Liegt der Faservolumengehalt unter 10 % ist es prozesstechnisch und ökonomisch sinnvoller auf ein kommerziell bereits erhältliches Kurzfaserfilament zurückzugreifen, welches ähnliche Festigkeiten zu einem günstigeren Preis bieten kann. Bei höheren Faservolumengehalten über 50 % ist der Zusammenhalt der einzelnen Drucklagen bei Verwendung im FDM 3Druck nicht mehr optimal gegeben. Des Weiteren ist bei einem Faservolumengehalt unter 50 % die Biegeflexibilität des imprägnierten Zwirns ausreichend hoch, um eine gute Zuführung im Druckprozess zu gewährleisten.

Gemäß einer noch weiteren bevorzugten Ausführungsform der vorliegenden Erfindung kann mindestens ein Garn neben den endlichen Kohlenstofffasern endliche sekundäre Fasern ausgewählt aus der Gruppe bestehend aus Glasfasern, Aramidfasern, Polyethylenfasern, Thermoplastfasern, Naturfasern, Basaltfasern oder Keramikfasern oder beliebige Mischungen davon enthalten. Diese Fasern können ebenfalls als streckgerissene Fasern oder als Stapelfaser vorliegen; für diese sekundären Fasern gelten die für die Kohlenstofffasern oben angegebenen Herstellungsverfahren, Filament- und Längenbereiche. Wenn sekundäre Fasern eingesetzt werden, so wird bevorzugt, dass alle Garne, die für die Herstellung der Zwirne verwendet werden, solche sekundären Fasern enthalten. Im Rahmen der Erfindung werden diese sekundären Fasern entweder den Kohlenstoffasern bei der Garnherstellung beigemischt oder es wird ein Garn bzw. Garne aus Kohlenstofffasern und ein Garn bzw. Garne aus sekundären Fasern zu einem Zwirn verdreht.

Enthält ein erfindungsgemäßer Zwirn sekundäre Fasern, so liegt der Faservolumengehalt dieser Fasern in einem Bereich von 1 - 69 %, bevorzugt in einem Bereich von 1 - 40 %, bevorzugter in einem Bereich von 5 - 20 %. Ist der Faservolumengehalt der sekundären Fasern unterhalb von 1 %, so haben die Fasern keine erkennbare Auswirkung auf die Eigenschaften des Zwirns; liegt der Faservolumengehalt bei über 69 %, so verliert der Zwirn die Eigenschaften der Kohlenstofffasern.

Der erfindungsgemäße Zwirn ist mit mindestens einem Polymer, ausgewählt aus der Gruppe bestehend aus thermoplastisch verarbeitbaren Polymeren, Duroplasten und/oder Elastomeren imprägniert. Durch die Imprägnierung des Zwirns wird es ermöglicht, dass der Zwirn mechanische Druckbelastungen aushält, womit die Herstellung von Bauteilen aus diesen Zwirnen ermöglicht wird. Bevorzugt wird zur Imprägnierung als Polymer mindestens ein Thermoplast eingesetzt. Die Verwendung eines Thermoplastes hat den Vorteil, dass dieses Material eine hohe Zähigkeit und eine schnelle Formbarkeit aufweist.

Im Rahmen der Erfindung wird das mindestens eine thermoplastisch verarbeitbare Polymer aus der Gruppe bestehend aus Benzoxazine, Polyamid 6, Polyamid 6.6, Polyamid 12, Polyamid 4.10, Polylactide, Polyhydroxyalkanoate, Polyhydroxybutyrate, Styrol-Acrylnitril-Copolymere, Acrylnitril-Butadien-Styrol-Copolymere, Acrylester-Styrol-Acrylnitril-Copolymere, Polycarbonate, Polystyrole, Polyvinylalkohole, Polyvinylacetate, Celluloseacetate, Polyethylenterephthalate, Polybutylenterephthalate, Polymethylmethacrylate, Polyetheretherketone, Polyetherketone, Polyetherimide, Polyphenylenethere, Polyethersulfone, thermoplastische Polyurethane, thermoplastische Elastomere, Novolake, Resole und Novolak-Resol Mischungen,

Polyethylene, (Co) Polyester, und Polypropylene, Polypropylene und/ oder Polyvinyidenfluoride ausgewählt. Bevorzugter wird als Thermoplast Polyamid 6, Polyamid 6.6, Polyamid 12, Polyamid 4.10, Polyetheretherketon, Polyetherketon, Polyetherimid, Polyphenylenether, Polyethersulfon oder Polypropylen eingesetzt.

Bei dem erfindungsgemäßen Zwirn handelt es sich um einen geschlagenen Zwirn, d.h. mindestens zwei Garne sind miteinander zu einem Zwirn geschlagen. Der Begriff "schlagen" umfasst insbesondere verdrillen, verdrehen, helikal verdrehen und verzwirnen. Ein Schlag umfasst hierbei eine volle Verdrillung und gibt somit die Periodizität des Zwirns entlang seiner Längsrichtung an.

Der erfindungsgemäße Zwirn weist eine Schlagzahl in einem Bereich von 50 bis 1000 m⁻¹, bevorzugt in einem Bereich von 50 bis 750 m⁻¹, bevorzugter in einem Bereich von 100 bis 600 m⁻¹, noch bevorzugter in einem Bereich von 100 bis 400 m⁻¹, besonders bevorzugt in einem Bereich von 150 bis 300 m⁻¹, auf.

Weiterhin kann es sich bei dem erfindungsgemäßen Zwirn um einen pultrudierten Zwirn handeln. Unter Pultrusion wird im Allgemeinen ein Strangziehverfahren verstanden. Wird die Pultrusion zur Herstellung des erfindungsgemäßen Zwirns eingesetzt, so kann die Imprägnierung dieses Zwirns erfolgen, indem Zwirne durch die Pultrusionsanlage gezogen und dabei zeitgleich imprägniert werden. Es ist auch möglich, dass während der Pultrusion der Zwirn an der Außenseite eine Profilierung erhält. Eine solche Profilierung des Zwirns kann allerdings auch nach der Pultrusion erfolgen.

Ein Verfahren zur Herstellung eines erfindungsgemäßen Zwirns umfasst folgende Schritte:
a) Bereitstellen mindestens zweier Garne, wobei mindestens ein Garn endliche Kohlenstofffasern enthält,
b) Schlagen der mindestens zwei Garne zu einem Zwirn,
c) Imprägnieren des Zwirns mit einem Polymer ausgewählt aus der Gruppe bestehend aus thermoplastisch verarbeitbaren Polymeren, Duroplasten und/oder Elastomeren und
d) Kühlen des Zwirns.

Hierbei kann in Schritt c) das Imprägnieren mit einer reaktiven Flüssigkeit, mit einer Schmelze, mit einem reaktiven oder nicht reaktiven Pulver, mit einer Folie oder mit verwirkten Thermoplastfasern oder einer beliebigen Mischung davon erfolgen.

Reaktiv bedeutet im Sinne der vorliegenden Erfindung, dass die Imprägnierung aufgrund von chemischen Reaktionen erfolgt; Monomere und/oder Oligomere reagieren hierbei zu einem Polymer. Bevorzugt erfolgt die Imprägnierung mit der Schmelze, da hier ein schneller Prozess sichergestellt werden kann. Der Zwirn wird gleichmäßig mit dem Polymer imprägniert, da sich dieses durch den ggf. herbeizuführenden flüssigen Zustand gleichmäßig und in möglicherweise bestehende Zwischenräume "einbringt".

Wird zur Herstellung des erfindungsgemäßen Zwirns ein Pultrusionsschritt verwendet, so erfolgt dieser Schritt entweder vor dem Kühlen des Zwirns gemäß Schritt d) oder nach Schritt b), wobei das Imprägnieren des Zwirns gemäß Schritt c) während der Pultrusion erfolgt.

Der erfindungsgemäße Zwirn eignet sich zur Verwendung als FDM (Fused Deposition Modelling) -Druckfilament für 3D-Druck, als Verstärkungsgerüst für beispielsweise Spritzguss, als elektrischer Leiter und/oder als Antennenstruktur.

Nachfolgend wird die vorliegende Erfindung anhand von diese erläuternden, diese aber nicht einschränkenden Beispielen beschrieben.

### Ausführungsbeispiele:

### Ausführungsbeispiel 1:

Ein Zwirn, erhältlich unter dem Handelsnamen SIGRAFIL C SB70-3.3/240-R100, wurde einer Pultrusionsanlage zugeführt und während der Pultrusion mit einer flüssigen Schmelze von Polyamid 6 (PA6, Thermoplast) imprägniert, durch eine Düse mit 0,4 mm Durchmesser gezogen und aufgespult. Das so erhaltene Produkt, mit einem Faservolumengehalt von 31 %, konnte als Druckfilament auf handelsüblichen FDM-3D-Druckern zur Herstellung von faserverstärkten 3D-Druckerzeugnissen verwendet werden.

Bei der Herstellung von SIGRAFIL C SB70-3.3/240-R100 werden Kohlenstofffaserrovings, umfassend 50.000 (50k) Filamente streckgerissen und mit bekannten Spinnverfahren zu einem 35 Tex Garn versponnen. Dann werden 2 Garne zu einem Zwirn mit insgesamt 70 Tex (1k-CF äquivalent) verdrillt, wobei die Schlagzahl 230 beträgt. Spinn- und Zwirndrehung laufen entgegengesetzt, sodass sich die auftretenden Momente im Produkt aufheben. Abschließend wird ein SBR (Styrol Butadien Rubber) basierendes Coating aufgebracht.

### Ausführungsbeispiel 2:

Ein Kohlenstofffaserroving, umfassend 50k Filamente wurde streckgerissen und mit bekannten Spinnverfahren zu einem 70 tex Garn versponnen.

Dann wurden 2 Garne zu einem Zwirn mit 140 Tex verdrillt, wobei die Schlagzahl 230 beträgt. Spinn- und Zwirndrehung laufen entgegengesetzt, so dass sich die auftretenden Momente im Produkt aufheben. Abschließend wird ein Sizing aufgebracht, das auf den später aufgebrachten Thermoplast abgestimmt ist.

Insgesamt 7 dieser Zwirne wurden einer Pultrusionsanlage zugeführt und während der Pultrusion mit einer flüssigen Form eines thermoplastisch verarbeitbaren Polymeren imprägniert, zusammen durch eine Düse mit 1,2 mm Durchmesser gezogen und aufgespult. Das so hergestellte Produkt mit einem Faservolumengehalt von 48 % konnte als Druckfilament auf handelsüblichen FDM-3D-Druckern, beispielsweise mit einer 1,2 mm Düse (hot end) zur Herstellung von faserverstärkten 3D-Druckerzeugnissen, verwendet werden.

Vorteilhafterweise führt dies dazu, dass bei einer Biegung und/oder einem Umlenken des erfindungsgemäßen Zwirns (als Druckfilament) geringe Druckspannungen erzeugt werden, insbesondere werden geringere Druckspannungen als bei herkömmlichen Druckfilamenten erzeugt. Als herkömmliche Druckfilamente werden Druckfilamente mit Endlosfaserverstärkung eingesetzt, welche gestreckte parallele Fasern, z.B. Kohlenstofffasern, in Form von sogenannten Rovings enthalten. Weiterhin können durch die Verwendung der erfindungsgemäßen Zwirne 3D-Druckerzeugnisse mit geringen Umlenkradien hergestellt werden; somit können 3D-Druckerzeugnisse mit komplexen Geometrien hergestellt werden. Bei Verwendung von herkömmlichen Druckfilamenten sind solche geringen Umlenkradien nur sehr schwer umsetzbar, was dazu führt, das komplexe und filigrane Strukturen nur sehr schwer hergestellt werden können. Außerdem erhöht die Verwendung eines Stapelfasergarns die Querkraftverbindung der einzelnen Drucklagen. Weiterhin wird der Druckprozess vereinfacht und die Materialkosten können im Gegensatz zur Verwendung von kontinuierlichen Carbonfasern gesenkt werden.

### KURZE BESCHREIBUNG DER FIGUREN

Die Figuren zeigen:
Figur 1A zeigt eine Seitenansicht eines imprägnierten Garns gemäß dem Stand der Technik.
Figur 1B zeigt eine Seitenansicht eines erfindungsgemäßen Zwirns.
Figur 2A zeigt eine Draufsicht eines imprägnierten Garns gemäß dem Stand der Technik.
Figuren 2B und 2C zeigen jeweils eine Draufsicht von erfindungsgemäßen Zwirnen, aufweisend zwei bzw. Garne.
Figur 3 zeigt eine Seitenansicht eines Zwirns ohne Imprägnierung, welcher aus zwei Garnen enthaltend endliche Kohlenstofffasern hergestellt worden ist.

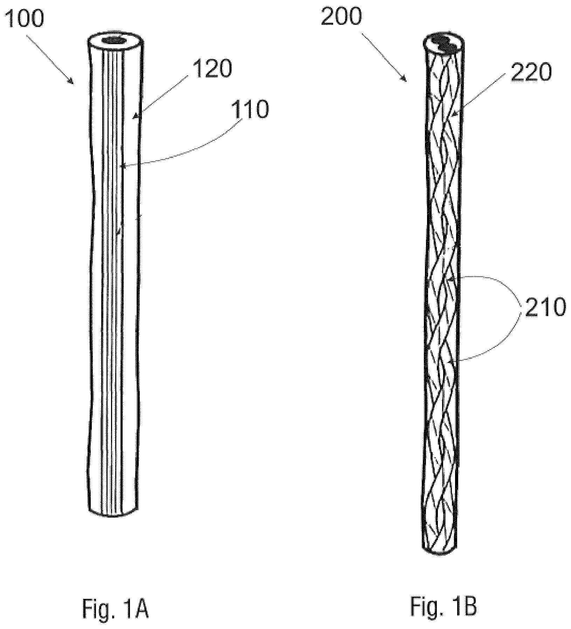

In Figur 1A wird ein aus dem Stand der Technik bekanntes imprägniertes Garn 100 gezeigt, welches auf der Kern-Schale-Geometrie basiert, und welches als FDM-Druckfilament verwendet werden kann. Hierbei wird die Endlosfaser 110 im Kern geführt und ist bereits mit einem Matrixmaterial getränkt. Im Mantel des z.B. Druckfilaments befindet sich unverstärktes Matrixmaterial. Dieses FDM-Druckfilament weist einen Kern mit parallelen Endlosfasern 110 und eine Schale 120 auf, welches überschüssiges Matrixmaterial enthält.

Figur 1B zeigt einen erfindungsgemäßen Zwirn 200, welcher z.B. als FDM-Druckfilament verwendet werden kann. Hierbei werden zwei Garne 210 miteinander helikal zu einem Zwirn verdreht, und imprägniert. Das überschüssige Matrixmaterial 220 verbleibt als Reservoir in Kanälen entlang der Helix.

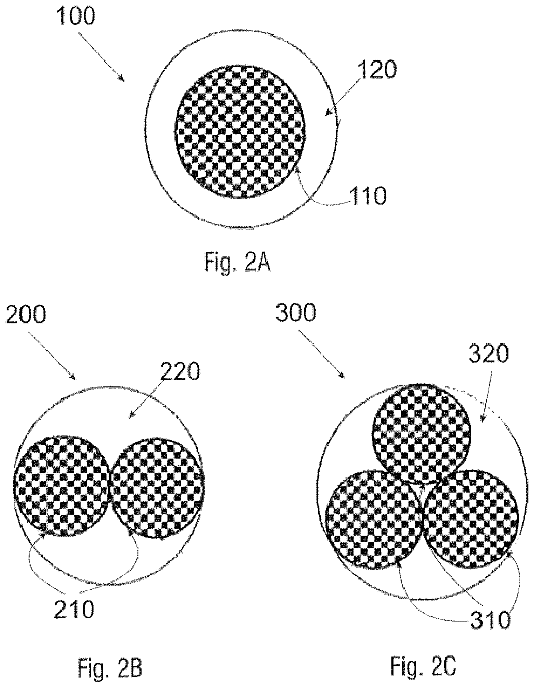

Figur 2A zeigt eine Draufsicht eines auf der Kern-Schale-Geometrie basierenden Garns gemäß dem Stand der Technik, und die Figuren 2B und 2C zeigen jeweils eine Draufsicht von erfindungsgemäßen Zwirnen 200 und 300, aufweisend zwei bzw. drei Garne 210 und 310. Sowohl das Garn als auch die Zwirne können als FDM-Druckfilament eingesetzt werden. Wie aus den Figuren ersichtlich, ist das Faservolumengehalt der erfindungsgemäßen Zwirne höher als bei dem imprägnierten Garn, was dazu führt, dass die mechanische Stabilität der Zwirne und damit der damit hergestellten Bauteile, im Vergleich mit dem imprägnierten Garn höher ist. Wird z.B. der erfindungsgemäße Zwirn als FDM-Druckfilament eingesetzt, so weist das damit hergestellte 3D-Druckerzeugnis also eine höhere mechanische Stabilität auf.

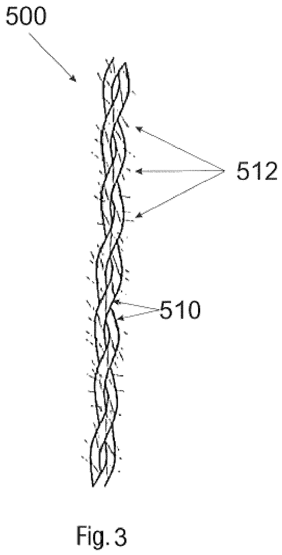

Figur 3 zeigt eine Seitenansicht eines Zwirns 500 umfassend zwei Garne 510 enthaltend endliche Kohlenstofffasern. Diese endlichen Kohlenstofffasern weisen radial abstehende Filamentenden 512 auf. Bei einem imprägnierten Zwirn werden durch diese radial abstehenden Filamentenden die Interaktion zwischen den Garnen und innerhalb des imprägnierten Zwirns verbessert. Bei Verwendung eines erfindungsgemäßen Zwirns als FDM-Druckfilament werden die Querfestigkeiten der Drucklagen gesteigert.

## Patentansprüche

1. Zwirn (200, 300, 500), umfassend mindestens zwei Garne (210, 310, 510), wobei mindestens ein Garn endliche Kohlenstofffasern enthält, und der Zwirn mit mindestens einem Polymer (220, 320) ausgewählt aus der Gruppe bestehend aus thermoplastisch verarbeitbaren Polymeren, Duroplasten und/oder Elastomeren, imprägniert ist, **dadurch gekennzeichnet, dass** der Faservolumengehalt im Zwirn weniger als 50 % beträgt.

2. Zwirn nach Anspruch 1, **dadurch gekennzeichnet, dass** der Zwirn 2 - 21 Garne aufweist.

3. Zwirn nach Anspruch 1 oder 2, **dadurch gekennzeichnet, dass** mindestens ein Garn 25 - 100 Tex aufweist.

4. Zwirn nach Anspruch 1, **dadurch gekennzeichnet, dass** mindestens ein Garn, aus endlichen Kohlenstofffasern gebildet ist.

5. Zwirn nach Anspruch 1, **dadurch gekennzeichnet, dass** mindestens ein Garn neben den endlichen Kohlenstofffasern endliche sekundäre Fasern ausgewählt aus der Gruppe bestehend aus Glasfasern, Aramidfasern, Polyethylenfasern, Thermoplastfasern, Naturfasern, Basaltfasern oder Keramikfasern oder beliebige Mischungen davon enthält.

6. Zwirn nach Anspruch 4 oder 5, **dadurch gekennzeichnet, dass** die endlichen Fasern streckgerissene Fasern und/oder Stapelfasern, bevorzugt streckgerissene Fasern, sind.

7. Zwirn nach Anspruch 6, **dadurch gekennzeichnet, dass** die Länge der endlichen Fasern in einem Bereich von 2 - 250 mm liegt.

8. Zwirn nach Anspruch 1, **dadurch gekennzeichnet, dass** der Faservolumengehalt im Zwirn in einem Bereich von 10 - 45 % liegt.

9. Zwirn nach Anspruch 1, **dadurch gekennzeichnet, dass** das mindestens eine Polymer ein thermoplastisch verarbeitbares Polymer ist.

10. Zwirn nach Anspruch 9, **dadurch gekennzeichnet, dass** das thermoplastisch verarbeitbare Polymer aus der Gruppe bestehend aus Benzoxazine, Polyamid 6, Polyamid 6.6, Polyamid 12, Polyamid 4.10, Polylactide, Polyhydroxyalkanoate, Polyhydroxybutyrate, Styrol-Acrylnitril-Copolymere, Acrylnitril-Butadien-Styrol-Copolymere, Acrylester-Styrol-Acrylnitril-Copolymere, Polycarbonate, Polystyrole, Polyvinylalkohole, Polyvinylacetate, Celluloseacetate, Polyethylenterephthalate, Polybutylenterephthalate, Polymethylmethacrylate, Polyetheretherketone, Polyetherketone, Polyetherimide, Polyphenylenethere, Polyethersulfone, thermoplastische Polyurethane, thermoplastische Elastomere, Novolake, Resole und Novolak-Resol Mischungen, Polyethylene, (Co) Polyester und Polypropylene und/ oder Polyvinyidenfluoride ausgewählt wird.

11. Zwirn nach Anspruch 1, **dadurch gekennzeichnet, dass** der Zwirn geschlagen ist, und die Schlagzahl in einem Bereich von 50 bis 1000 m⁻¹, liegt.

12. Verfahren zur Herstellung eines Zwirns nach einem der Ansprüche 1 bis 11 umfassend folgende Schritte:
a) Bereitstellen mindestens zweier Garne, wobei mindestens ein Garn endliche Kohlenstofffasern enthält,
b) Schlagen der mindestens zwei Garne zu einem Zwirn,
c) Imprägnieren des Zwirns mit einem Polymer ausgewählt aus der Gruppe bestehend aus thermoplastisch verarbeitbaren Polymeren, Duroplasten und/oder Elastomeren, wobei der Faservolumengehalt im Zwirn weniger als 50% beträgt, und
d) Kühlen des Zwirns.

13. Verfahren zur Herstellung eines Zwirns nach Anspruch 12, **dadurch gekennzeichnet, dass** ein Pultrusionsschritt erfolgt, entweder vor dem Kühlen des Zwirns gemäß Schritt d) oder nach Schritt b), wobei das Imprägnieren des Zwirns gemäß Schritt c) während der Pultrusion erfolgt.

14. Verwendung eines Zwirns nach mindestens einem der Ansprüche 1 bis 11 als Fused Deposition Modelling-Druckfilament, als Verstärkungsgerüst, als elektrische Leiter oder als Antennenstruktur.

## Claims

1. Yarn (200, 300, 500) comprising at least two threads (210, 310, 510), wherein at least one thread contains finite carbon fibers, and the yarn is impregnated with at least one polymer (220, 320) selected from the group consisting of thermoplastically processable polymers, thermosetting plastics and/or elastomers, **characterized in that** the fiber volume content in the yarn is less than 50%.

2. Yarn according to claim 1, **characterized in that** the yarn has 2-21 threads.

3. Yarn according to claim 1 or 2, **characterized in that** at least one thread has 25-100 tex.

4. Yarn according to claim 1, **characterized in that** at least one thread is made of finite carbon fibers.

5. Yarn according to claim 1, **characterized in that** at least one thread contains, in addition to the finite carbon fibers, finite secondary fibers selected from the group consisting of glass fibers, aramid fibers, polyethylene fibers, thermoplastic fibers, natural fibers, basalt fibers or ceramic fibers or any mixtures thereof.

6. Yarn according to claim 4 or 5, **characterized in that** the finite fibers are stretch-broken fibers and/or staple fibers, preferably stretch-broken fibers.

7. Yarn according to claim 6, **characterized in that** the length of the finite fibers is in a range of 2-250 mm.

8. Yarn according to claim 1, **characterized in that** the fiber volume content in the yarn is in a range of 10-45%.

9. Yarn according to claim 1, **characterized in that** the at least one polymer is a thermoplastically processable polymer.

10. Yarn according to claim 9, **characterized in that** the thermoplastically processable polymer is selected from the group consisting of benzoxazines, polyamide 6, polyamide 6.6, polyamide 12, polyamide 4.10, polylactides, polyhydroxyalkanoates, polyhydroxybutyrates, styrene-acrylonitrile copolymers, acrylonitrile-butadiene-styrene copolymers, acrylic ester-styrene-acrylonitrile copolymers, polycarbonates, polystyrenes, polyvinyl alcohols, polyvinyl acetates, cellulose acetates, polyethylene terephthalates, polybutylene terephthalates, polymethyl methacrylates, polyether ether ketones, polyether ketones, polyetherimides, polyphenylene ethers, polyether sulfones, thermoplastic polyurethanes, thermoplastic elastomers, novolacs, resols, and novolac-resol mixtures, polyethylenes, (Co) polyesters and polypropylenes and/or polyvinylidene fluorides.

11. Yarn according to claim 1, **characterized in that** the yarn is twisted, and the twist rate is in a range of 50 to 1000 m⁻¹.

12. Method for producing a yarn according to any of claims 1 to 11, comprising the following steps:
a) providing at least two threads, wherein at least one thread contains finite carbon fibers,
b) twisting the at least two threads to form a yarn,
c) impregnating the yarn with a polymer selected from the group consisting of thermoplastically processable polymers, thermosetting plastics and/or elastomers, wherein the fiber volume content in the yarn is less than 50%, and
d) cooling the yarn.

13. Method for producing a yarn according to claim 12, **characterized in that** a pultrusion step takes place either before the cooling of the yarn according to step d) or after step b), wherein the impregnation of the yarn according to step c) takes place during the pultrusion.

14. Use of a yarn according to at least one of claims 1 to 11 as a fused deposition modeling printing filament, as a reinforcing frame, as an electrical conductor or as an antenna structure.

## Revendications

1. Retors (200, 300, 500), comprenant au moins deux fils (210, 310, 510), dans lequel au moins un fil contient des fibres de carbone finies, et le retors est imprégné d'au moins un polymère (220, 320) choisi dans le groupe constitué de polymères transformables de manière thermoplastique, duroplastes et/ou élastomères, **caractérisé en ce que** la teneur en volume de fibres dans le retors est inférieure à 50 %.

2. Retors selon la revendication 1, **caractérisé en ce que** le retors présente 2 à 21 fils.

3. Retors selon la revendication 1 ou 2, **caractérisé en ce qu'**au moins un fil présente 25 à 100 tex.

4. Retors selon la revendication 1, **caractérisé en ce qu'**au moins un fil est formé à partir de fibres de carbone finies.

5. Retors selon la revendication 1, **caractérisé en ce qu'**au moins un fil contient, outre les fibres de carbone finies, des fibres secondaires finies choisies dans le groupe constitué de fibres de verre, fibres d'aramide, fibres de polyéthylène, fibres thermoplastiques, fibres naturelles, fibres de basalte ou fibres céramiques ou de mélanges quelconques de celles-ci.

6. Retors selon la revendication 4 ou 5, **caractérisé en ce que** les fibres finies sont des fibres discontinues craquées et/ou des verrannes, de préférence des fibres discontinues craquées.

7. Retors selon la revendication 6, **caractérisé en ce que** la longueur des fibres finies se situe dans une plage allant de 2 à 250 mm.

8. Retors selon la revendication 1, **caractérisé en ce que** la teneur en volume de fibres dans le retors se situe dans une plage allant de 10 à 45 %.

9. Retors selon la revendication 1, **caractérisé en ce que** l'au moins un polymère est un polymère transformable de manière thermoplastique.

10. Retors selon la revendication 9, **caractérisé en ce que** le polymère transformable de manière thermoplastique est choisi dans le groupe constitué de benzoxazines, polyamide 6, polyamide 6.6, polyamide 12, polyamide 4.10, polylactides, polyhydroxyalcanoates, polyhydroxybutyrates, copolymères styrène-acrylonitrile, copolymères acrylonitrile-butadiène-styrène, copolymères ester acrylique-styrène-acrylonitrile, polycarbonates, polystyrènes, alcools polyvinyliques, polyacétates de vinyle, acétates de cellulose, polytéréphtalates d'éthylène, polytéréphtalates de butylène, polyméthacrylates de méthyle, polyétheréthercétones, polyéthercétones, polyétherimides, éthers de polyphénylène, polyéthersulfones, polyuréthanes thermoplastiques, élastomères thermoplastiques, novolaques, résols et mélanges de novolaque-résol, polyéthylènes, (co)polyesters et polypropylènes et/ou polyfluorures de vinylidène.

11. Retors selon la revendication 1, **caractérisé en ce que** le retors est tordu et la fréquence de torsion se situe dans une plage allant de 50 à 1 000 m⁻¹.

12. Procédé de fabrication d'un retors selon l'une des revendications 1 à 11, comprenant les étapes suivantes :
a) fourniture d'au moins deux fils, dans lequel au moins un fil contient des fibres de carbone finies,
b) torsion des au moins deux fils en un retors,
c) imprégnation du retors avec un polymère choisi dans le groupe constitué de polymères transformables de manière thermoplastique, duroplastes et/ou élastomères, dans lequel la teneur en volume de fibres dans le retors est inférieure à 50 %, et
d) refroidissement du retors.

13. Procédé de fabrication d'un retors selon la revendication 12, **caractérisé en ce qu'**une étape de pultrusion est effectuée, soit avant le refroidissement du retors selon l'étape d), soit après l'étape b), dans lequel, selon l'étape c), l'imprégnation du retors est effectuée pendant la pultrusion.

14. Utilisation d'un retors selon au moins l'une des revendications 1 à 11 comme filament d'impression de dépôt de fil fondu, comme armature de renforcement, comme conducteur électrique ou comme structure d'antenne.
